# EUROPEAN PATENT APPLICATION

(11) **EP 2 725 757 A1**
(43) Date of publication of application: **30.04.2014**
(21) Application number: 12306344.8
(22) Date of filing: 29.10.2012
(51) Int. Cl.: H04L 29/06

(54) **TLS protocol extension**

(71) Applicant: Alcatel Lucent, 75007 Paris (FR)
(72) Inventor: Roche, Sebastien, 67400 ILLKIRCH (FR); Degtounda, Marcel, 67400 ILLKIRCH (FR)
(74) Representative: El Manouni, Josiane

(57) **Abstract**

A handshake communication method between a client (1) and a server (4) comprising a sending step of a client hello message from the client (1) to the server (4), said client hello message including a name of the client so that the server (4) is aware of the identity of the said client (1) from the client hello message.

## Description

### FIELD OF THE INVENTION

The present invention relates to channel security protocols such as Transport Layer Security (TLS) protocol.

### BACKGROUND OF THE INVENTION

TLS is a widely deployed protocol over IP networks for providing a secure channel between two communicating hosts, typically a client and a server. In fact, TLS allows client/server-based applications (such as Web browsing, electronic mail, Voice-over-IP, video-phoning, video-conferencing, Internet faxing, or instant messaging) to communicate, while preventing eavesdropping and message forgery and tampering.

TLS includes a handshake protocol for authentication and security parameters negotiation between two communicating entities, and a record protocol for data transfer between these two communicating entities using the parameters agreed via the handshake protocol.

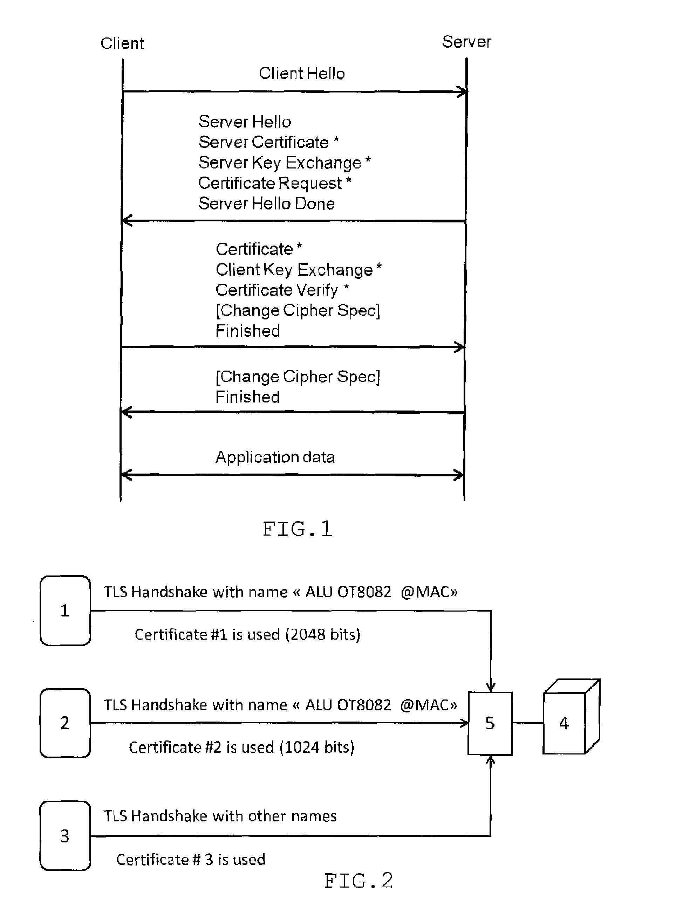

For establishing a TLS session, the handshake protocol - as defined in RFC2246 - allows peers to agree upon security parameters for the record layer (such as the encryption algorithm and the encryption keys), to authenticate themselves, to instantiate negotiated security parameters and to report error conditions to each other. With reference to figure 1, these tasks are performed through a series of handshake messages exchange in a specific order between a client and a server:
- the client sends a "Client Hello" message to the server;
- the server responds with a "Server Hello" message. In the two hello messages, the client and the server agree on security parameters and authenticate themselves: the server sends its certificate to the client. If needed, it sends also a certificate request in the same message. It might also send a "server key exchange" message if the certificate is not sufficient.
- in response, the client sends a "client key exchange" message and its certificate to the server along with a "certificate verify" message so that the server explicitly verify this certificate;
- both, the client and the server send "change cipher spec" messages and proceed directly to finished messages. Subsequently, the client and the server may begin to send and receive application data using the negotiated session parameters.

It follows that the handshake protocol checks the identity of the client after exchanging the certificates for authentication (by the end of the third step of figure 1 in which the client send its certificate).

However, such approach for client identity verification by the server may represent a serious problem for many reasons.

In fact, for instance, in a wide communication network such as Internet, a server providing a certain service (including business transactions) is particularly subject to strange clients with no prior relationship and no common security domain with them. In this case, the server does check the identity of clients only by the end (i.e. at the conclusion) of the handshaking.

Furthermore, a server may be interested to serve only particular clients (for example, being in a predefined list or being located in a given state). Nevertheless, according to the existing TLS handshake protocol, this server is constrained to carry out more than one step of the handshake protocol to check the identity of clients, and to be able to decide on the continuation of the interaction.

Yet another problem is that the server's behavior regarding certificates exchange and cipher negotiation during TLS handshake is the same, without any relevance to the identity of the clients. Accordingly, there is no way for a server to know which client is triggering a TLS handshake before the handshake is actually finished.

One object of the present invention is to amend the security in TLS handshake protocol.

Another object of the present invention is to customize the server behavior regarding certificates exchange and cipher negotiation during TLS handshake.

Another object of the present invention is to provide a secure and backward channel security protocol.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to handshake communication methods between a client and a server comprising a sending step of a client hello message from the client to the server, said client hello message including a name of the client so that the server is aware of the identity of the said client from the client hello message.

In accordance with a broad aspect, the above methods further comprise a requesting step of a certificate from the client, said requested certificate being dependent on the client identity.

In accordance with another broad aspect, the above methods further comprise a sending step of an error message when the name of the client is unknown to the server.

Various embodiments relate to a server configured to receive, from a client, in a handshake session a client hello message, said client hello message comprising a name of the client so that the server is aware of the identity of the said client from the client hello message, said server being programmed to request a certificate depending on the said identity of the client.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
- FIG.1, presented above, is a block diagram illustrating the message flow between a client and a server for a handshake;
- FIG.2 is a schematic diagram illustrating an embodiment according to an extended TLS handshake protocol.

### DETAILED DESCRIPTION OF ILLUSTRATIVE EMBODIMENTS

With reference to figure 1, there is shown a plurality of clients **1-3** being able to interact in a client-server mode with a server **4.**

The term "client" is meant broadly and not restrictively, to include any device or software application being able to interact, through a communication network, with a remote communicating entity. A SIP phone, a Web browser, a smartphone, a messaging client, a logging application, or a remote desktop client are examples of the clients **1-3.** Likewise, the server **4** is any communicating entity being able to interact, through a communication network, with at least a client **1-3.**

To initiate a handshaking session with the server **4,** the client **1** is configured to send a "Client Hello" message comprising its name (i.e. the name of the client **1)** in a dedicated field designated "client_name".

In other words, the client **1** provides in a dedicated field "client_name" in the "Client Hello" message its identity to the server **4.**

Accordingly, the server **4** is aware of the identity of the client **1** that triggers the handshake session from the first message of the handshake protocol, which is the "Client Hello" message. Hence, the server **4** can make use of handshake policies and decide on the continuation of the handshake session.

To that end, the TLS handshake protocol is extended to include in the enum Extension Type (enumerated type), which contains a new value (RFC 6066):
enum {
server_name(0), max_fragment_length(1),
client_certificate_url(2), trusted_ca_keys(3),
truncated_hmac (4), status_request(5),
**client_name**(6), (65535)} ExtensionType;

In one embodiment, the structure of the extension is as follows:

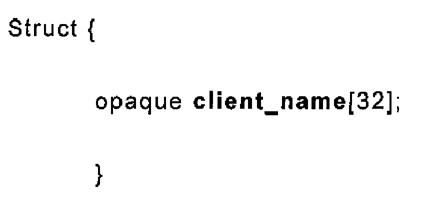

The identity of the client **1** is defined, so that a client may not be confused with another, by the server **4.** As a non-limitative example, a 32 bytes string is used to uniquely identify clients **1-3** by one or a plurality of attribute information.

In one embodiment, the client **1** is identified
- in the 16 first bytes, by its vendor, model and version information; and
- in the 16 last bytes, by an identifier identifying the physical device, such as the MAC address.

For instance, as illustrated in figure 2, the client name of clients **1-2** is of the following form: "ALU OT8082 00123FA456E8", namely to identify the Alcatel-Lucent OmniTouch® 8082 phone (vendor name + model + version and the MAC address).

Advantageously, the identity of clients (i.e. the client name) is ordinarily static (i.e. not subject to change or variation), so that different certificates may be reserved for different identities. It means that even if some different clients use a same server certificate at one point in time, changing the configuration of one server **4** is enough to redefine which server certificate is used by which client, without touching the clients configuration.

In an illustrative embodiment, let us suppose that a product line of devices (i.e. client entities) from a telecommunication supplier uses the certificate #1 which is 1024 bits large. If, later on, it appears that the older (and slower) devices must stay in 1024 bits, but some of the newer devices, which need a greater security, must be enhanced to 2048 bits large certificates, then, according to the disclosed embodiments, there is no need to modify each device on the field (there can be a large number of clients), but only to modify the configuration of the server to which both older and newer client devices are configured to connect.

As depicted in figure 2, different certificates (certificate#1, certificate#2, and certificate #3) are used with different clients, depending on their names or more generally on their identities. Moreover, these certificates may be of different sizes (for example, 2048 bits or 1024 bits). For example, the client **1** "Omnitouch® 8082 SIP phone" and other clients **2-3** may all use the same TLS port entry **5** (such as the standard port 443) and no virtual server, but each client receives the appropriate certificate during the handshake. Some specific phones can have specific security policy if they are more at risk, or for legal reasons (depending on the country for example). It is to be noted that, advantageously, all clients **1-3** - compatible or not with the disclosed TLS extension - are connecting to the same standard TLS port entry **5** on the server **4** (consequently, no need for a specific configuration).

It is further advantageously possible for the server **4** to request specific client certificates depending on the client identities provided in the "Client Hello" message. In fact, even if the trust store of the server **4** permits the access of clients sending the certificates CL_1 or CL_2, it can request CL_1 from client **1** and CL_2 from client **2,** thus increasing the security level (if the client **1** presents the certificate CL_2, it cannot access the server **4,** which may solve important security issues, for example if CL_2 is obsolete but must still be used by some old devices).

In this case, the client's identity must be verified afterwards - the client's certificate must contain the identity of the client (for example the Common Name can be the MAC address of the device, like for the OmniTouch® 8082).

Furthermore, a new error value is defined: unrecognized_client_name (115) in the enum Alert Description (RFC 6066). When a client sends a message "Client Hello" with an unknown client name to the server **4,** the server **4** can react in different ways:
- abort the negotiation by sending a fatal-level "unrecognized_client_name"; or
- continue the negotiation with the default policy and in this case it can chose to warn the client by a warning-level "unrecognized_client_name" or not.

Advantageously, the proposed extension is backwards compatible: communication is possible between TLS clients that do not support the above-described extensions and TLS servers that support this extension. In other words, when a client sends a "Client Hello" message without "client_name" extension, the default policy is applied.

Advantageously, the above described channel security protocol allows the use of different certificates for different clients, so that clients are not bound to a certain security policy forever. In fact, it is possible with the disclosed embodiments to change the policy for certain client devices and not for others, without touching client devices configuration.

Advantageously, thanks to the above described methods, it is possible to add newer certificates for newer client devices without needing to modify anything in older client devices configuration, thus being totally transparent for customers (less costs, less troubles, and faster).

## Claims

1. A handshake communication method between a client (1) and a server (4) comprising a sending step of a client hello message from the client (1) to the server (4), said client hello message including a name of the client so that the server (4) is aware of the identity of the said client (1) from the client hello message.

2. The method of claim 1, wherein it further comprises a requesting step of a certificate from the client (1), said requested certificate being dependent on the client identity.

3. The method of any of the preceding claims, wherein the name of the client (1) is defined so that it uniquely identifies the said client.

4. The method of any of the preceding claims, wherein the name of the client is a 32 bytes string.

5. The method of any of the preceding claims, wherein it further comprises a sending step of an error message when the name of the client is unknown to the server (4).

6. A server (4) configured to receive, from a client (1), in a handshake session a client hello message, said client hello message comprising a name of the client so that the server (4) is aware of the identity of the said client (1) from the client hello message, said server being programmed to request a certificate depending on the said identity of the client (1).

7. The server of claim 6, wherein it is further programmed to send to the client an error message when the name of the client is unknown thereto.

8. Computer program implemented on a processing unit of a computer, said program including code sections for performing instructions corresponding to the steps of a method according to any of claims 1 to 5.
